# EUROPÄISCHE PATENTSCHRIFT

(11) **EP 0 509 250 B1**
(45) Veröffentlichungstag und Bekanntmachung des Hinweises auf die Patenterteilung: **25.01.1995**
(21) Anmeldenummer: 92104451.7
(22) Anmeldetag: 16.03.1992
(51) Int. Cl.: B09B 3/00, C03B 5/00

(54) **Verfahren zum umweltverträglichen Verglasen von festen oder flüssigen Rückständen aus Sonderabfall-Verbrennungsanlagen und Vorrichtung zur Durchführung dieses Verfahrens**
Method and device for the non-polluting vitrification of solid or liquid residues from special waste incineration plants
Procédé et dispositif pour la vitrification non-polluante des résidus solides ou liquides d'installations d'incinération de déchets spéciaux

(30) Priorität: 13.04.1991 DE 4112162
(43) Veröffentlichungstag der Anmeldung: 21.10.1992
(73) Patentinhaber: Beteiligungen Sorg GmbH & Co. KG, D-97816 Lohr (DE); MAN Gutehoffnungshütte Aktiengesellschaft, 46122 Oberhausen (DE)
(72) Erfinder: Pieper, Helmut, Dipl.-Ing., W-8770 Lohr-Main (DE); Lausberg, Helmut, Dr.-Ing., W-4200 Oberhausen 11 (DE)
(74) Vertreter: Schulze Horn, Stefan, Dipl.-Ing. M.Sc.

(56) Entgegenhaltungen:
- EP-A- 0 294 362
- EP-A- 0 335 033
- EP-A- 0 359 003
- EP-A- 0 373 557
- EP-A- 0 417 520
- EP-A- 0 437 679
- DE-A- 2 849 166
- DE-C- 3 841 918
- US-A- 4 191 546
- VGB KRAFTWERKSTECHNIK. Bd. 70, Nr. 5, Mai 1990, ESSEN DE Seiten 428 - 430;'VGB-KONFERENZ "RÜCKSTÄNDE AUS DER MÜLLVERBRENNUNG"'
- PATENT ABSTRACTS OF JAPAN vol. 13, no. 546 (C-661)(3894) 6. Dezember 1989
- CHEMISTRY AND INDUSTRY. 16. Juni 1985, LETCHWORTH GB Seiten 416 - 422; PALMARK:'FUTURE OPTIONS FOR DISPOSAL OF HAZARDOUS WASTES'

## Beschreibung

Die Erfindung betrifft ein Verfahren zum umweltverträglichen Verglasen von festen oder flüssigen Rückständen aus Sonderabfall-Verbrennungsanlagen und eine Vorrichtung zur Durchführung des Verfahrens.

Bei einer Verbrennungsanlage für Sonderabfälle aus chemischer Produktion, die als kontaminierte, teilweise feste und flüssige Substanzen anfallen, werden zur Entsorgung Drehrohröfen mit diesen festen bzw. flüssigen Stoffen etwa im Verhältnis 1 : 1 beschickt. Die Aschen aus dem Abhitzekessel und die Stäube aus der Abgasreinigungsanlage, die erneut entstandene Dioxine und/oder Furane enthalten, werden in Transportgefäße eingebracht und werden dabei mit wässrigen Lösungen oberflächenaktiver Stoffe angefeuchtet, um Staubbelastungen bei der Handhabung zu vermeiden. Die Asche und die Filterstäube werden dann vermischt und mit den festen Sonderabfällen in die Drehrohröfen eingegeben und dort in der anorganischen Matrix der Flüssigschlacke eingebunden. Über einen Naßentschlacker wird die glasig erstarrte Schlacke abgezogen.

Diese glasig erstarrte Schlacke enthält sowohl Schwermetalle, als auch Chloride, Kohlenstoff und Halogenide. Sie muß nachteilig als Sondermüll behandelt und deponiert werden.

In der vor dem Anmeldetag eingereichten, aber nachveröffentlichten EP-A-0 437 679 (stand der Technik gemäß Artikel 54(3)EPÜ) ist bereits ein Verfahren zum Behandeln von Rückständen einer Abfallverbrennungsanlage und eine Abfallverbrennungsanlage zur Durchführung des Verfahrens beschrieben, die mit Sauerstoffbrennern arbeitet. Eine Einbindung der Rückstände in Glas ist dabei nicht vorgesehen. Es fallen außerdem größere Abgasmengen an.

Aufgabe der Erfindung ist es, eine Sonderabfall-Verbrennungsanlage zu schaffen, mit der alle flüssigen und festen, mit Dioxinen, Furanen, Schwermetallen, Salzen usw. beladenen Rückstände in eine Form überführt werden kann, die eine umweltfreundliche Weiterverwendung bzw. Deponierung dieser Abfälle möglich macht.

Weiterhin sollen, was bei bekannten Sonderabfall-Verbrennungsanlagen nicht möglich ist, Schwermetalle von den übrigen Rückständen separiert werden, so daß sie getrennt deponiert und ggf. wiederverwendet werden können.

Diese Aufgabe wird durch ein Verfahren gemäß Patentanspruch 1 und eine Vorrichtung gemäß Patentanspruch 7 gelöst.

Weitere vorteilhafte Ausgestaltungen des erfindungsgemäßen Verfahrens und der erfindungsgemäßen Vorrichtung sind in den Unteransprüchen genannt.

Die Erfindung basiert vorteilhaft darauf, daß die Rückstände aus einem Drehrohrofen im Rahmen einer weiteren thermischen Behandlung separiert, thermisch inertisiert und in eine Glasmasse überführt werden, die anschließend einer Weiterverwendung zugeführt werden kann.

Erfindungsgemäß wird für diese Rückstandsnachbehandlung, bei der nicht nur die festen und flüssigen Schlacken aus dem Drehrohrofen verglast werden, sondern auch die Beseitigung der in den abgeschiedenen Stäuben der dem Drehrohrofen nachgeschalteten Einrichtungen enthaltenen Dioxine und Furane stattfindet, ein an sich bekannter, jedoch für diesen Zweck modifizierter Schmelzofen gewählt. Dieser Schmelzofen wird in die bekannte Sonderabfall-Verbrennungsanlage integriert.

Auf diese Weise wird in vorteilhafter Weise eine direkte Nachbehandlung von festen und flüssigen Rückstandsprodukten aus dem Drehrohrofen, die zusätzliche Behandlung von Filterstäuben aus den Rauchgasreinigungsanlagen, die Separierung und Einbindung von Schwermetallanteilen in ein glasiges Endprodukt, die restlose Zerstörung von Dioxinen und Furanen, eine Volumen- und Gewichtsreduzierung und dadurch die Erzeugung eines umweltfreundlicheren Glasproduktes ermöglicht, das zur Weiterverwendung und/oder zur Deponierung in normalen Deponien geeignet ist.

Ein Verfahren zur Überführung von festen, weitgehend wasserfreien Abfallstoffen aus einer Müllverbrennungsanlage in Glasform sowie die Vorrichtung zur Durchführung des Verfahrens ist aus der DE 38 41 889 A1 bekannt. Bei diesem Verfahren werden die Abfallstoffe in Form von fester, weitgehend wasserfreier Müllverbrennungsasche einem Schmelzofen zugeführt. Das Schmelzgefäß, die stromgespeisten Elektroden sowie deren stromführende Zuleitungen sind in der DE 34 45 557 A1 beschrieben. Ein weiterer Verfahrensschritt zum Einschmelzen von Glas wird in der DE 34 45 548 A1 genannt. In der DE 28 49 166 A1 wird weiterhin ein elektrisch beheizter Schmelzofen für mineralische Stoffe vorgestellt, dessen wesentliche Bauelemente und Verfahrensmerkmale zum Teil dem Ofen der erfindungsgemäßen Nachbehandlungsanlage gleichen.

Bei der Elektroschmelze nach den vorstehend genannten Öfen dient die Glasschmelze als Widerstand, der Strom fließt über ins Schmelzbad eingetauchte Elektroden durch das Glasbad. Die Leitfähigkeit der Glasschmelze beruht dabei auf der Ionenleitfähigkeit.

Bei der vorliegenden Erfindung wird dieser an sich bekannte Schmelzofen unmittelbar in die Sonderabfall-Verbrennungsanlage integriert, und zwar anstelle eines bisher verwendeten Naßentschlackers direkt betrieblich hinter der Nachbrennkammer.

Durch diese Anordnung ergeben sich für die Gesamtanlage weiterhin die Vorteile,
- daß alle festen Rückstände nur an einer Stelle entsorgt werden,
- der Wärmeinhalt der flüssigen Schlacke des Drehofens bei der direkten Nachbehandlung ausgenutzt wird und
- daß die Abgase aus dem Schmelzprozeß unmittelbar in den Rauchgasstrom der Sonderabfall-Verbrennungsanlage zur Reinigung und Kühlung zurückgeleitet werden.

Im folgenden wird ein Ausführungsbeispiel der Erfindung anhand von Zeichnungen näher erläutert. Es zeigen:
- Figur 1: schematisch einen Längsschnitt einer Sonderabfall-Verbrennungsanlage zur Durchführung des erfindungsgemäßen Verfahrens mit zur Klarheit verschwenkter Bunkeranlage für die Zuschläge,

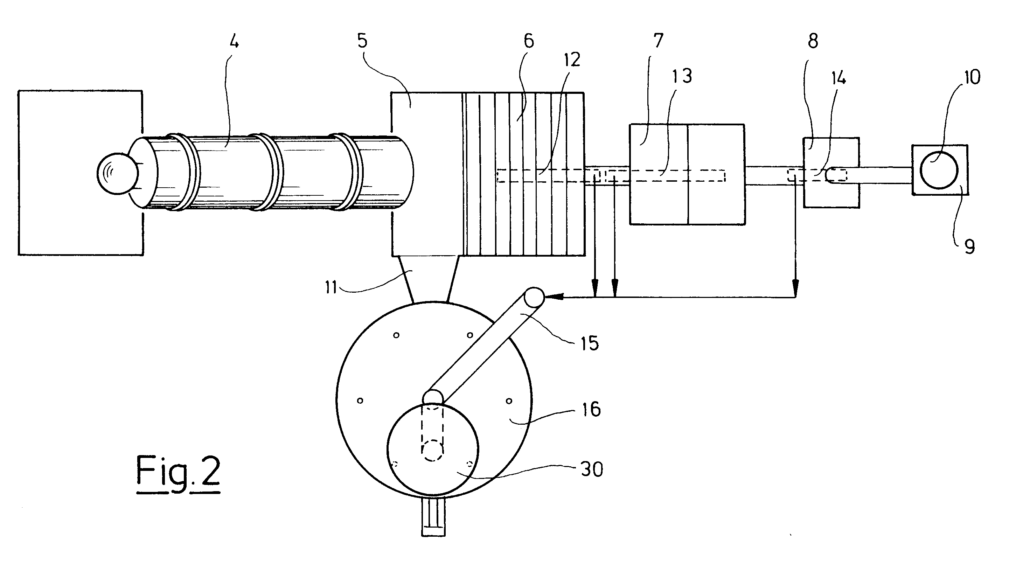

- Figur 2: die Draufsicht auf diese Anlage mit um 90° gedrehtem Schmelzofen,

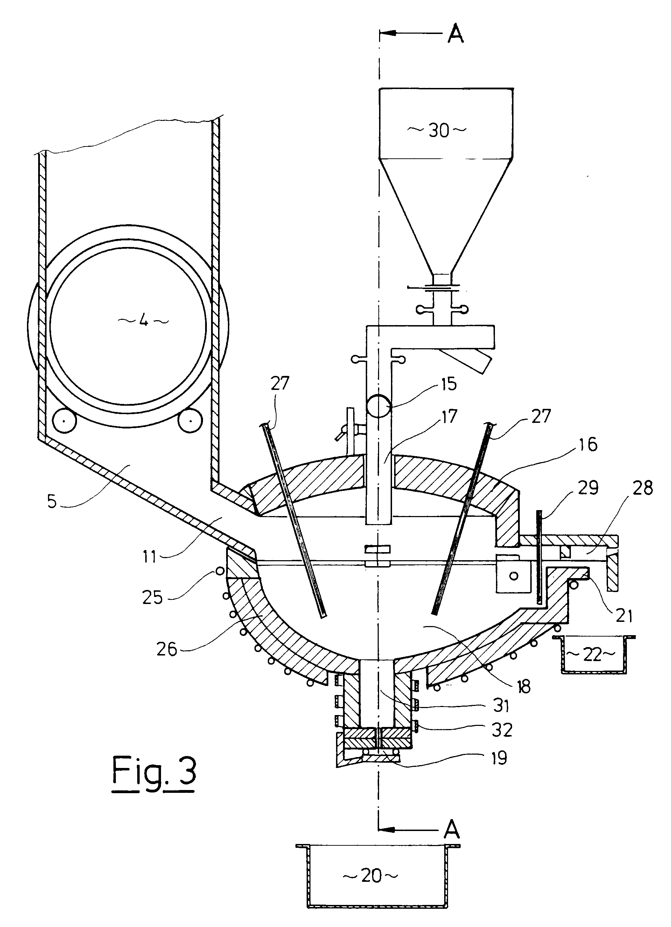

- Figur 3: einen Querschnitt durch den Schmelzofen gemäß Figur 2 zur Durchführung des Verfahrens und

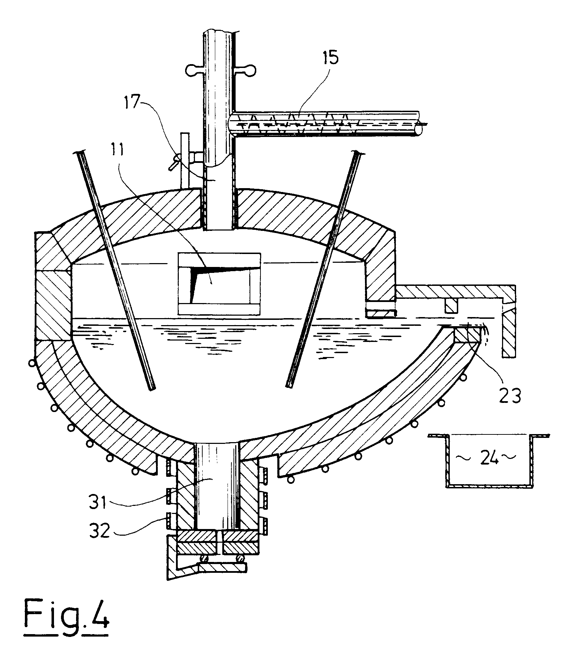

- Figur 4: einen Querschnitt des Schmelzofens in der Stellung gemäß Figur 1.

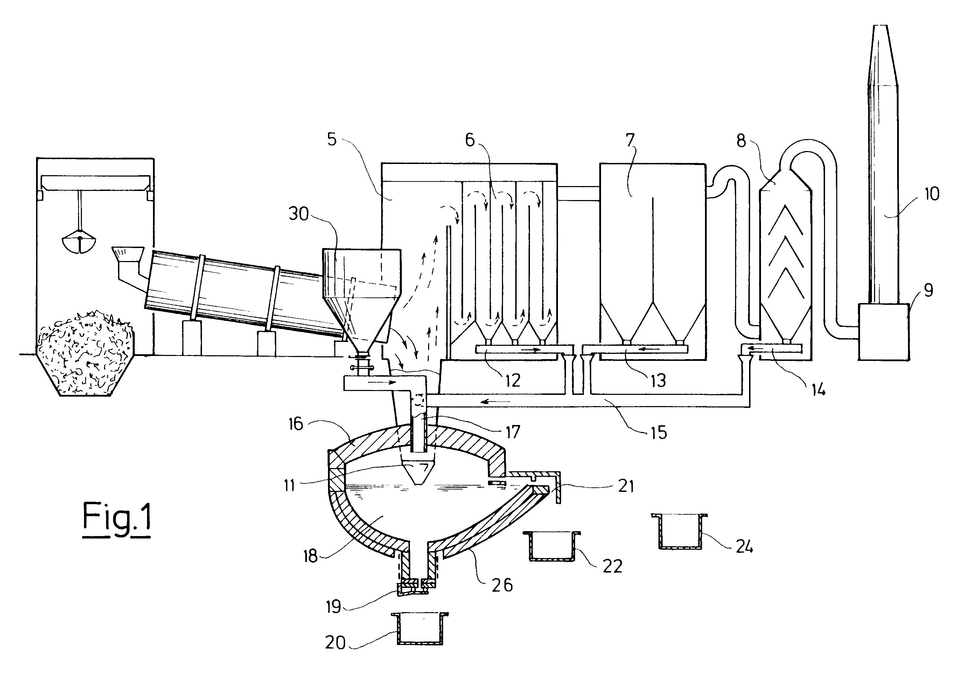

Die in Figur 1 dargestellte Sonderabfall-Verbrennungsanlage umfaßt als Kerneinrichtungen einen Drehrohrofen 4, eine Nachbrennkammer 5, den Abhitzekessel 6 sowie die Abgasreinigungsanlage 7, 8 mit Saugzuggebläse 9 und Reingaskamin 10.

Für die Nachbehandlung von festen Rückständen und Schlakken aus dem Drehrohrofen 4 sowie der Asche aus dem Abhitzekessel 6 und der Filterstäube aus den Reinigungsanlagen 7, 8, die als Schadstoffe zusätzlich Schwermetalle, Dioxine und Furane enthalten können, wird als Nachbehandlungsanlage ein modifizierter, elektrisch beheizter Glasschmelzofen 16, 18 ansonsten üblicher Bauart schräg unter der Nachbrennkammer 5 installiert.

Für die Zuführung der flüssigen Schlacken und festen Rückstände aus dem Drehrohrofen 4 verbindet ein Schlakkenzugabetrichter 11 das Ofenoberteil 16 und die Nachbrennkammer 5. Die Zugabe der Restprodukte vom Abhitzekessel 6, Staubfilter 7 sowie Rauchgasfeinreiniger 8 erfolgt über die zugehörigen Staubaustrageinrichtungen 12, 13 und 14 und eine Zugabevorrichtung 15 für Grob- und Feinstäube. Diese Zugabevorrichtung 15 wird in der Form gesteuert, daß die kalten Abfallprodukte diskontinuierlich in Abhängigkeit vom anfallenden Schlackenvolumen und Rückständen aus dem Drehrohrofen 4 zugegeben werden können und daß ferner über diese Zugabevorrichtung 15 Zuschläge wie z.B. Scherben aus einer Bunkeranlage 30, falls erforderlich, zur Erzielung eines verwendbaren Glasproduktes, chargiert werden können.

Die Abgase des Schmelzofens werden durch den Schlackenzugabetrichter 11 der Nachbrennkammer 5 zugeführt und von dort zusammen mit Abgasen aus dem Drehrohrofen 4 in den Abgasreinigungsanlagen 7, 8 gereinigt und gekühlt. Mit den Abgasen aus dem Auslauf- und Überlaufteil 21, 23 des Glasschmelzofens wird in gleicher Weise verfahren; die Abgase aus diesem Teil des Ofens werden über mindestens eine Sammelleitung erfaßt und in den Schlackenzugabetrichter 11 geleitet bzw. direkt mit durch den Schmelzofen abgezogen.

Die Endprodukte des Schmelzofens 16, 18 werden aufgrund des spezifischen Gewichtes einer (gravimetrischen) Trennung durch Schwerkraft unterzogen.

Im Boden des Ofengefäßes 18 ist die Abstichvorrichtung für Schwermetalle 19, im seitlich angeordneten Abstichbereich der Auslauf 28 für die Glasmasse 21 und der Abzug für die Glasgalle 23 angeordnet. Diesen Öffnungen für die verschiedenen Produkte sind die entsprechenden Transportgefäße 20, 22, 24 zugeordnet.

Zur Erzeugung der erforderlichen Schmelzwärme sind Elektroden 27 im Bereich des Unterofens in gleichmäßigen Abständen angeordnet. Mindestens eine zusätzliche Widerstandselektrode 29 ist im Auslaufteil 21 angeordnet. Derartige Elektroden sind aus der Patentliteratur bekannt. Die Absetzkammer 31 und deren induktive Beheizung 32 ermöglichen die Sammlung der Schwermetalle bei einer gewünschten Temperatur.

Zwischen Ofendeckel 16 und Unterofen 18 werden zusätzlich flüssigkeitsdurchströmte Kühlelemente 25 angeordnet, der Herd des Glasschmelzofens ist dagegen mit feuerfesten Materialien 26 ausgekleidet.

Die Steuerung, Überwachung und Regelung des Schmelzgefäßes und seiner Zusatzeinrichtung sowie eine Prozeßautomation der Nachbehandlungsanlage kann in die Gesamtsteueranlage der Sonderabfall-Verbrennungsanlage einbezogen und über Interfaces gekoppelt sein.

## Patentansprüche

1. Verfahren zum umweltverträglichen Verglasen von festen oder flüssigen Rückständen aus Sonderabfall-Verbrennungsanlagen, wobei der Sonderabfall in einem Drehrohrofen verbrannt wird, dessen Abgas einer Reinigung zugeführt wird,
**dadurch gekennzeichnet,**
daß die Schlacke aus der Verbrennung und die Rückstände aus der Abgasreinigung direkt in einen Glasschmelzofen eingeleitet und in diesem verglast werden, wobei der Schmelze des Glasschmelzofens glasbildende Stoffe wie Phonolit, SiO₂, oder Scherben zugesetzt werden.

2. Verfahren nach Anspruch 1, dadurch gekennzeichnet, daß die Abgase aus der Verbrennung und aus dem Glasschmelzofen zusammengeführt und darauf gemeinsam gekühlt und danach gereinigt werden.

3. Verfahren nach Anspruch 2, dadurch gekennzeichnet, daß die zusammengeführten Abgasströme gemeinsam einer Nachverbrennung bei einer zur Zerstörung der Dioxine und Furane ausreichenden Temperatur unterworfen werden.

4. Verfahren nach einem der Ansprüche 1 bis 3, gekennzeichnet durch die Bildung einer Glasgalleschicht auf dem Glasbad des Glasschmelzofens und einem getrennten Abzug von Glas und Glasgalle.

5. Verfahren nach Anspruch 4, dadurch gekennzeichnet, daß die nicht in das Glas einbindbaren Schwermetallbestandteile im tiefsten Teil des Ofens unter Schwerkrafteinfluß gesammelt und von dort abgezogen werden.

6. Verfahren nach einem der Ansprüche 1 bis 5, dadurch gekennzeichnet, daß die Förderung der Schlacke in den Glasschmelzofen unter Schwerkrafteinfluß erfolgt.

7. Vorrichtung zu Durchführung des Verfahrens nach Anspruch 1 bis 6 mit einem einer Aufgabevorrichtung (30) des Mülls nachgeschalteten Drehrohrofen (4), dadurch gekennzeichnet, daß für eine Nachbehandlung der Schlacke des Drehrohrofens (4) ein Glasschmelzofen (16, 18) mit direkter vollelektrischer Beheizung mittels Elektroden 827) und einer Beschickungseinrichtung (17) für Filterstaub und Zuschlagsstoffen betrieblich mit einer Nachbrennkammer (5) verbunden ist.

8. Vorrichtung nach Anspruch 7, dadurch gekennzeichnet, daß ein Schlackenzugabetrichter (11) für die Rückstände aus dem Drehrohrofen (4) unterhalb der Nachbrennkammer (5) angeordnet ist und dieser in das Oberteil des Schmelzofens (16) mündet und daß eine Zugabeeinrichtung für Grob- und Feinstaub (15) aus den dem Drehrohrofen (4) mit Nachbrennkammer (5) nachgeschalteten Reinigungseinrichtungen (6, 7, 8) am Oberteil des Schmelzofens (16) angeordnet ist.

9. Vorrichtung nach den Ansprüchen 7 und 8, dadurch gekennzeichnet, daß am oberen Umfang des Schmelzofens (16) flüssigkeitsdurchströmte Kühlelemente (25) und eine zusätzliche Kühlung im Bereich des Unterofens (26) vorgesehen ist.

10. Vorrichtung nach den Ansprüchen 7 bis 9, dadurch gekennzeichnet, daß der Schmelzofen (18) an seinem tiefsten Punkt eine Abzugseinrichtung (19) für Schwermetall und am Oberteil (16) Überlaufeinrichtungen (21, 23) für Glas und ggf. Glasgalle enthält.

11. Vorrichtung nach Anspruch 10, dadurch gekennzeichnet, daß im unteren Teil des Ofens eine Absetzkammer (31) für Schwermetalle angeordnet ist, die eine elektrische Beheizung (32) aufweist.

12. Vorrichtung nach den Ansprüchen 7 bis 11, dadurch gekennzeichnet, daß eine direkte Zuführung der Abgase des Schmelzofens (16, 18) in den unteren Bereich der Nachbrennkammer (5) vorgesehen ist.

13. Vorrichtung nach den Ansprüchen 7 bis 12, dadurch gekennzeichnet, daß Mittel zur Erfassung der Abgase aus dem Überlaufteil (21, 23) und Überleitung in den Schlackenzugabetrichter (11) des Schmelzofens (16, 18) vorhanden sind.

14. Vorrichtung nach den Ansprüchen 7 bis 13, dadurch gekennzeichnet, daß in einer Absetzkammer (31) eine elektrische Beheizung (32) zur Erzeugung von Temperaturen vorhanden ist, die die Eisen- und Schwermetalle in einem weitgehend flüssigen, vermischten Zustand vorhalten.

## Claims

1. Method for the non-polluting vitrification of solid and liquid residues from special waste incineration plants wherein the special waste is incinerated in a rotary tubular kiln, the exhaust gas of which is cleaned thereafter,
**characterized in**,
that the slag resulting from the incineration and the residues resulting from the exhaust gas cleaning are fed directly into a glass melting furnace and vitrified therein wherein glass forming substances like phonolite, SiO₂, or broken glass are added to the molten glass of the glass melting furnace.

2. Method according to claim 1, characterized in that the exhaust gases resulting from the incineration and from the glass melting furnace are combined and thereupon cooled together and cleaned thereafter.

3. Method according to claim 2, characterized in that the combined exhaust gas streams are together subjected to an after-burning at a temperature sufficient to destroy furanes and dioxines.

4. Method according to claim 1 to 3, characterized by the formation of a layer of gall of glass on the molten glass of the glass melting furnace and a separate exhaust of glass and gall of glass.

5. Method according to claim 4, characterized in that the heavy metal parts which cannot be incorporated in the glass are collected in the downmost part of the furnace under influence of gravity and are exhausted therefrom.

6. Method according to claims 1 to 5, characterized in that the conveying of the slag in the glass melting furnace is attained under influence of gravity.

7. Device for carrying out the method according to claims 1 to 6, comprising a rotary tubular kiln (4) downstream of a feeding device (30) of the garbage,
**characterized in**,
that for a secondary treatment of the slag of the rotary tubular kiln (4) a glass melting furnace (16, 18) with a completely electrical direct heating by means of electrodes (27) and a feeding device (17) for filter dust and flux powders is operably connected with an after-burner chamber (5).

8. Device according to claim 7, characterized in that a slag input hopper (11) for the residues out of the rotary tubular kiln (4) is arranged below the afterburner chamber (5) with the hopper opening into the upper part of the glass melting furnace (16), and that an input device for coarse and fine dust (15) resulting from the cleaning equipment (6, 7, 8) downstream of the rotary tubular kiln (4) with the afterburner chamber (5) is arranged at the upper part of the glass melting furnace (16).

9. Device according to claim 7 and 8, characterized in that at the upper circumference of the glass melting furnace (16) fluid streamed cooling elements (25) are provided, and an additional cooling in the area of the lower part of the furnace is provided.

10. Device according to claim 7 to 9, characterized in that the melting furnace (18) at the downmost part thereof contains an exhaust device (19) for heavy metals, and at the upper part (16) contains flowover devices (21, 23) for glass and eventually gall of glass.

11. Device according to claim 10, characterized in that in the lower part of the furnace a settling chamber (31) for heavy metals is arranged comprising an electrical heating (32).

12. Device according to claim 7 to 11, characterized in that a direct supply of the exhaust gases of the melting furnace (16, 18) is provided into the lower part of the after-burner chamber (5).

13. Device according to claim 7 to 12, characterized in that means are provided for recovering the exhaust gases out of the flow-over devices (21, 23) and guiding them into the slag input hopper (11) of the melting furnace (16, 18).

14. Device according to claim 7 to 13, characterized in that in a settling chamber (31) an electrical heating (32) for generating temperatures is provided maintaining the iron and heavy metals in an almost liquid mixed state.

## Revendications

1. Procedé pour la vitrification non-polluante de résidus solides ou liquides provenant d'installations d'incinération de déchets spéciaux, les déchets spéciaux étant brülés dans un four rotatif dont les gaz d'échappement sont épurés,
**caractérisé** par le fait
que la scorie résultant de l'incinération et les résidus de l'épuration des gaz d'échappement sont introduits directement dans un four de fusion de verre et y sont vitrifiés, des produits formant du verre comme du phonolite, du SiO₂ ou du calcin étant ajoutés à la masse fondue du four de fusion de verre.

2. Procédé selon la revendication 1, **caractérisé** par le fait que les gaz d'échappement provenant de l'incinération et ceux provenant du four de fusion de verre sont rassemblés puis sont refroidis ensemble et sont ensuite épurés.

3. Procédé selon la revendication 2, **caractérisé** par le fait que les flux de gaz d'échappement rassemblés sont soumis ensemble à une postcombustion à une température suffisante pour détruire les dioxines et les furanes.

4. Procédé selon l'une des revendications 1 à 3, **caractérisé** par la formation d'une couche de fiel de verre sur le bain de verre du four de fusion de verre et par une évacuation séparée du verre et du fiel de verre.

5. Procédé selon la revendication 4, **caractérisé** par le fait que les métaux lourds qui ne peuvent pas être liés dans le verre sont collectés par gravité dans la partie la plus basse du four et sont évacués à partir de là.

6. Procédé selon l'une des revendications 1 à 5, **caractérisé** par le fait que le transport de la scorie dans le four de fusion de verre s'effectue par gravité.

7. Dispositif pour la mise en oeuvre du procédé selon les revendications 1 à 6, comportant un four rotatif (4) monté en aval d'un dispositif d'addition (30) des déchets **caractérisé** par le fait que pour le retraitement de la scorie du four rotatif (4), un four de fusion de verre (16, 18) chauffé directement et entièrement électriquement au moyen d'électrodes (27) et équipé d'un dispositif de chargement (17) de poussière de filtrage et de fondants est relié du point de vue du fonctionnement à une chambre de postcombustion (5).

8. Dispositif selon la revendication 7, **caractérisé** par le fait qu'un cône d'addition de scories (11) pour les résidus provenant du four rotatif (4) est disposé sous la chambre de postcombustion (5) et qu'il débouche dans la partie supérieure du four de fusion (16) et qu'un dispositif d'addition (15) de grosses poussières et de poussières fines provenant des dispositifs d'épuration (6, 7, 8) montés en aval du four rotatif (4) avec la chambre de postcombustion (5), est disposé sur la partie supérieure du four de fusion (16).

9. Dispositif selon les revendications 7 et 8, **caractérisé** par le fait qu'il est prévu à la périphérie supérieure du four de fusion (16), des éléments de refroidissement (25) parcourus par un liquide et un refroidissement supplémentaire dans la zone inférieure du four (26).

10. Dispositif selon les revendications 7 à 9, **caractérisé** par le fait que le four de fusion (18) comprend en son point le plus bas, un dispositif d'extraction (19) pour des métaux lourds et sur la partie supérieure (16) des dispositifs de décharge (21, 23) pour du verre et éventuellement du fiel de verre.

11. Dispositif selon la revendication 10, **caractérisé** par le fait que la partie inférieure du four comporte une chambre de décantation (31) pour des métaux lourds qui présente un dispositif de chauffage (32) électrique.

12. Dispositif selon les revendications 7 à 11, **caractérisé** par le fait qu'une amenée directe des gaz d'échappement du four de fusion (16, 18) est prévue dans la zone inférieure de la chambre de postcombustion (5).

13. Dispositif selon les revendications 7 à 12, **caractérisé** par le fait qu'il existe des moyens pour collecter les gaz d'échappement provenant de la zone de décharge (21, 23) et les diriger dans le cône d'addition de scories (11) du four de fusion (16, 18).

14. Dispositif selon les revendications 7 à 13, **caractérisé** par le fait que dans une chambre de décantation (31), il existe un dispositif de chauffage (32) électrique pour produire des températures qui maintiennent les métaux ferreux et lourds dans un état mélangé largement liquide.
